# EUROPÄISCHE PATENTANMELDUNG

(11) **EP 2 072 765 A1**
(43) Veröffentlichungstag der Anmeldung: **24.06.2009**
(21) Anmeldenummer: 07150348.6
(22) Anmeldetag: 21.12.2007
(51) Int. Cl.: F01D 25/18, F02C 6/12

(54) **Vorrichtung zur Druckanpassung**

(71) Anmelder: ABB Turbo Systems AG, 5400 Baden (CH)
(72) Erfinder: Schneider, Christof, DE-79804, Dogern (DE); Schumm, Manfred, CH-5304, Endingen (CH); Bothien, Mihajlo-Rüdiger, DE-79761, Waldshut-Tiengen (DE)
(74) Vertreter: ABB Patent Attorneys

(57) **Zusammenfassung**

Erfindungsgemäss wird der Luftaustritt (22) des Verdichters über ein Rückschlagventil (52) mit dem Lagerraum (11) verbunden.
Dadurch wird erreicht, dass in jeder Situation ein negatives Druckgefälle über den Dichtpartien zwischen Lagerraum und Turbine bzw. Verdichter anliegt, wodurch eine Leckage verhindert werden kann.

## Beschreibung

### Technisches Gebiet

Die Erfindung bezieht sich auf das Gebiet der Abgasturbolader für aufgeladene Brennkraftmaschinen. Sie betrifft eine Vorrichtung zur Druckanpassung im Bereich des Verdichters eines solchen Abgasturboladers.

Abgasturbolader werden zur Leistungssteigerung von Brennkraftmaschinen (Hubkolbenmotoren) eingesetzt. Ein Abgasturbolader besteht aus einer Abgasturbine im Abgasstrom der Brennkraftmaschine und einem Verdichter im Ansaugtrakt der Brennkraftmaschine. Das Turbinenrad der Abgasturbine wird vom Abgasstrom des Motors in Rotation versetzt und treibt über eine Welle das Laufrad des Verdichters an. Der Verdichter erhöht den Druck im Ansaugtrakt der Brennkraftmaschine, so dass beim Ansaugen eine größere Menge Luft in die Brennkammern gelangt. Abgasturbinen werden auch als Nutzturbinen eingesetzt. In diesem Fall treiben sie nicht den Verdichter eines Abgasturboladers an, sondern einen Generator oder über eine Kupplung ein anderes, mechanisches Nutzteil.

Abgasturbolader mit Gleitlagerung der Wellen werden in der Regel mit Öl aus dem Schmierkreislauf der Brennkraftmaschine (Motorenöl) geschmiert. Da die Wellen sehr schnell drehen (Umfangsgeschwindigkeiten von ca. 80 m/s im Radiallager), werden vorzugsweise berührungsfreie Dichtungen eingesetzt, um einen Austritt von Schmieröl aus der Lagerpartie in die Radseitenräume von Verdichter und Turbine zu verhindern. Gleichzeitig dienen diese Dichtpartien dazu, den Blow-by von Verdichterluft in den Ölraum zu begrenzen.

Die Funktionsreserven der berührungsfreien Dichtungen sind nicht sehr gross. Weichen die Randbedingen von den normalen Werten anlagenbedingt ab, oder wird die Geometrie durch Verschleiss oder Verschmutzung (Ölverkokung) verändert, kann es zu Ölaustritt kommen. Verdichterseitig führt dies zu unerwünschter Verschmutzung des Verdichterkanals bzw. des nachgeschalteten Ladeluftkühlers der Brennkraftmaschine. Turbinenseitig verkokt das austretende Öl im Bereich der Turbinenwelle oder gelangt in den Abgaskanal, wo es durch Verbrennen zu unerwünschtem Blaurauch führen kann. Durch die gestiegene Umweltsensibilität wird dies je länger je weniger toleriert.

Besonders im Anwendungsbereich von Lokomotiven (Traktion) kommt es zu langen Betriebszeiten im Tiefleerlauf der aufgeladenen Brennkraftmaschine, in der Regel ein Dieselmotor. In diesem Betriebszustand arbeitet das System Brennkraftmaschine - Turbolader im Saugbetrieb, da bei den gegebenen Turboladerleerlaufdrehzahlen der Verdichter keinen Druck aufbaut. Dies bewirkt am Luftaustritt des Verdichters einen Unterdruck der -40 bis -50 mbar betragen kann. Dieser Unterdruck setzt sich bis in das interne Sperrluftsystem des Abgasturboladers fort, welches zu einer negativen Druckdifferenz über den Dichtpartien (Turbinen- und Verdichterseite) führt. Diese negativen Drücke können wiederum zu Ölleckagen führen, welche insbesondere auf der Turbinenseite im Extremfall zu Verkokungen im Bereich Dichtungsdeckel und Turbinenscheibe oder dem bereits erwähnten Blaurauch führen können.

Eine mögliche Abhilfe kann ein Ventil zur Vermeidung/Reduzierung des maximal möglichen Unterdrucks ("vacuum breaker") verschaffen. Allerdings wird für solche Ventile ein gewisser Öffnungsdruck (Unterdruck) benötigt, und bei Überdruck im Lagergehäuse kann dennoch eine negative Druckdifferenz über den Dichtpartien bestehen bleiben.

### Kurze Darstellung der Erfindung

Eine Aufgabe der vorliegenden Erfindung besteht darin, das Dichtungssystem eines Abgasturboladers zu verbessern.

Erfindungsgemäss wird der Luftaustritt des Verdichters über eine Verbindungsleitung und ein darin angeordnetes Rückschlagventil mit dem Lagerraum verbunden. Diese Vorrichtung zur Druckanpassung nutzt den in gewissen Betriebspunkten am Luftaustritt des Verdichters anliegende Unterdruck, um im Lagerraum einen stärkeren Unterdruck aufzubauen als im Sperrluftsystem vorherrscht. Dadurch wird erreicht, dass in jeder Situation ein negatives Druckgefälle über den Dichtpartien zwischen Lagerraum und Verdichter bzw. Turbine anliegt, wodurch eine Leckage in den Verdichter und/ oder die Turbine sicher verhindert werden kann.

Das Rückschlagventil dient zum Verschluss der Verbindung zwischen dem Luftaustritt des Verdichters und dem Lagerraum für die Betriebsbedingungen in denen am Luftaustritt des Verdichters Überduck vorliegt. Dadurch wird ein Einströmen von Verdichterluft in den Lagerraum verhindert.

Eine optionale Drosselblende, welche zusätzlich in der Verbindungsleitung angeordnet werden kann, dient einerseits zum Einstellen der abgesaugten Luftmenge aus dem Lagerraum und andererseits zum Begrenzen des Leckagemassentroms im Falle eines Schadens am Rückschlagventil oder am Leitungssystem der erfindungsgemässen Vorrichtung zur Druckanpassung.

Um die Menge des eingetragenen Ölnebels in den Luftaustritt des Verdichters während des Absaugens zu begrenzen, kann optional ein Ölnebelabscheider in der Verbindungsleitung angeordnet werden.

Damit die abgesaugte Menge so gering wie möglich ausfällt, kann optional im Ölablauf des Abgasturboladers ein Siphon angeordnet werden.

Die erfindungsgemässe Vorrichtung sorgt auch für eine Aufrechterhaltung der Dichtung bei Überdruck im Lagerraum.

### Kurze Beschreibung der Zeichnungen

Nachfolgend wird eine Ausführungsform der Erfindung anhand von Zeichnungen detailliert erläutert. Hierbei zeigt
- Fig. 1: eine Ansicht eines Abgasturboladers, und
- Fig. 2: einen entlang II-II geführten Schnitt durch die Schmierölversorgung des Abgasturboladers nach Fig.1 mit mehreren Varianten a)- d) der erfindungsgemässen Vorrichtung zur Druckanpassung.

### Weg zur Ausführung der Erfindung

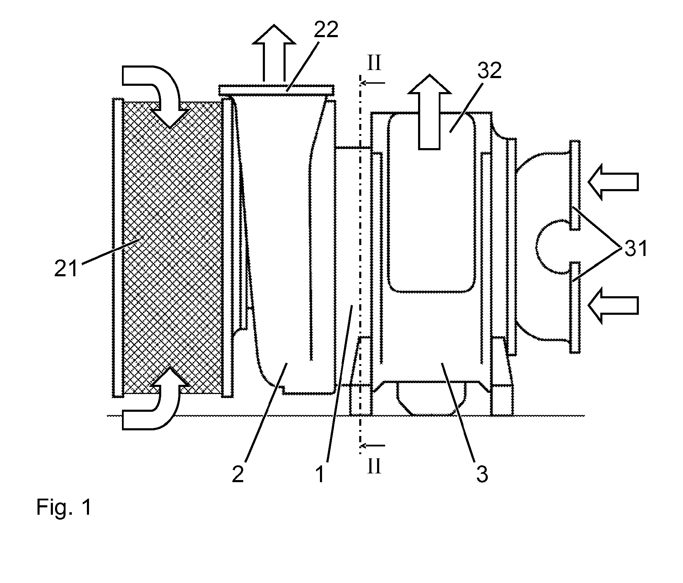

Fig. 1 zeigt einen Abgasturbolader mit den typischen Komponenten (von links): Filterschalldämpfer 21 (kann optional durch einen Luftansaugrohr ersetzt werden), Verdichter, Lagergehäuse, Abgasturbine. In der Darstellung sind jeweils nur die Gehäuse sichtbar, also das Verdichtergehäuse 2, das Lagergehäuse 1 und das Turbinengehäuse 3. im Verdichter wird die Luft durch den Filterschalldämpfer 21 angesaugt und über den Luftaustritt 22 des Verdichters zur Brennkraftmaschine geführt. Auf der Abgasturbinenseite wird das heisse Abgas durch den ein- oder mehrflutigen Gaseintritt 31 ein- und über den Gasaustritt 32 zum Auspuff abgeführt. Die jeweiligen Strömungsrichtungen sind mit den Pfeilen angedeutet.

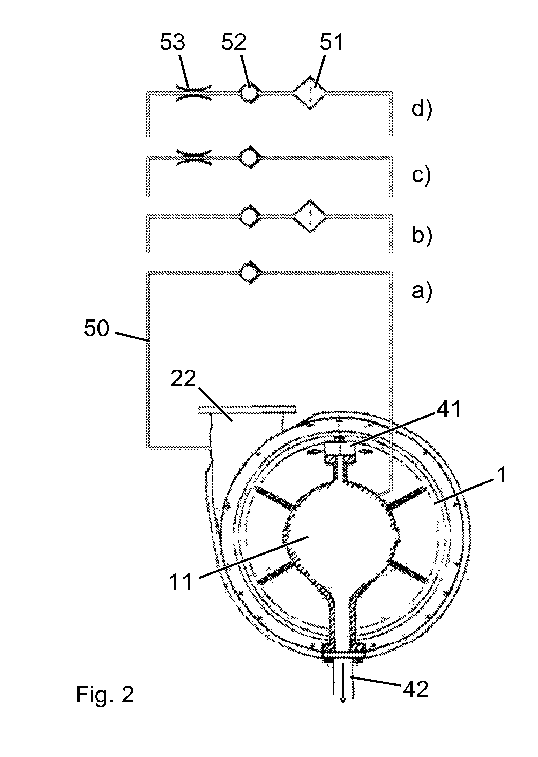

Fig. 2 zeigt einen entlang II-II durch das Lagergehäuse 1 des Abgasturboladers geführten Schnitt. Der Schnitt legt das Schmierölversorgungssystem der Lagerung der Turbinenwelle frei. Das Schmieröl wird über eine Ölzuführung 41 von oben in den Lagerraum eingeführt. Im unteren Bereich befinden sich ein Sammelbehälter und ein Ölabfluss 42. Die Turbinenwelle sowie Details der Lagerung sind nicht dargestellt. Der Lagerraum wird mit Schmieröl versorgt und ist, wie eingangs erwähnt, gegenüber den anderen Bereichen des Abgasturboladers, insbesondere den Luft- oder Abgasführenden Kanälen, abgedichtet.

Erfindungsgemäss wird der Luftaustritt des Verdichters 22 über Verbindungsleitung 50 mit dem Lagerraum verbunden. In der Verbindungsleitung 50 ist ein Rückschlagventil 52 angeordnet. Der beispielsweise im Saugbetrieb der Brennkraftmaschine am Luftaustritt des Verdichters anliegende Unterdruck wird genutzt, um im Lagerraum einen Unterdruck aufzubauen. Dadurch wird erreicht, dass ein negatives Druckgefälle über den Dichtpartien anliegt, wodurch eine Leckage in den Verdichter und/ oder die Turbine sicher verhindert werden kann. Das Rückschlagventil 52 dient zum Verschluss der Verbindung zwischen dem Luftaustritt des Verdichters und dem Lagerraum für die normalen Betriebsbedingungen in denen am Luftaustritt des Verdichters gegenüber dem Lagerraum Überdruck vorliegt. Dadurch wird ein Einströmen von Verdichterluft in den Lagerraum verhindert.

Die Fig. 2 zeigt mehrere Varianten der Verbindungsleitung 50. Variante a) verfügt lediglich über ein Rückschlagventil.

Zusätzlich zum Rückschlagventil kann eine Drosselblende 53 in der Verbindungsleitung 50 angeordnet sein. Diese dient einerseits zum Einstellen der abgesaugten Luftmenge aus dem Lagerraum und andererseits zum Begrenzen des Leckagemassentroms im Falle eines Schadens am Rückschlagventil oder am Leitungssystem der erfindungsgemässen Vorrichtung zur Druckanpassung. In der Fig. 2 verfügen die Variante c) und d) über eine Drosselblende.

Um die Menge des eingetragenen Ölnebels in den Luftaustritt des Verdichters während des Absaugens zu begrenzen, kann zusätzlich ein Ölnebelabscheider 51 in der Verbindungsleitung angeordnet werden. In der Fig. 2 verfügen die Varianten b) und d) über einen Ölnebelabscheider 51.

Damit die abgesaugte Menge so gering wie möglich ausfällt, kann optional im Bereich des Ölablaufs 42 des Abgasturboladers ein Siphon angeordnet werden.

Sind mehrere Komponenten in der erfindungsgemässen Verbindungsleitung 50 angeordnet, spielt die Reihenfolge der einzelnen Komponenten ein untergeordnete Rolle, kann also prinzipiell beliebig gewählt werden. Die dargestellte Ausführungsform stellt in diesem Sinne nur eine beispielhafte Reihenfolge dar. Ist der Ölnebelabscheider 51 stromaufwärts der anderen Komponenten angeordnet, das heisst in der Verbindungsleitung 50 näher zum Lagerraum 11, kann dies zur Verhinderung der Verschmutzung der anderen Komponenten von Vorteil sein.

### Bezugszeichenliste

- 1: Lagergehäuse des Abgasturboladers
- 11: Lagerraum
- 2: Verdichtergehäuse des Abgasturboladers
- 21: Filterschalldämpfer am Lufteintritt des Verdichters
- 22: Luftaustritt des Verdichters
- 3: Turbinengehäuse des Abgasturboladers
- 31: Gaseintritt der Abgasturbine
- 32: Gasaustritt der Abgasturbine
- 41: Ölzufuhr
- 42: Ölablauf
- 50: Verbindungsleitung zwischen Luftaustritt des Verdichters und dem Lagerraum
- 51: Ölnebelabscheider
- 52: Rückschlagventil
- 53: Drosselblende

## Patentansprüche

1. Vorrichtung zur Druckanpassung in einem Abgasturbolader, umfassend eine Verbindungsleitung (50) zwischen einem Luftaustritt (22) des Verdichters des Abgasturboladers und einem Lagerraum (11) des Abgasturboladers, wobei in der Verbindungsleitung (50) ein Rückschlagventil (52) angeordnet ist, welches schliesst, wenn am Luftaustritt (22) des Verdichters gegenüber dem Lagerraum (11) Überdruck vorliegt.

2. Vorrichtung zur Druckanpassung nach Anspruch 1, wobei in der Verbindungsleitung (50) zusätzlich eine Drosselblende (53) angeordnet ist.

3. Vorrichtung zur Druckanpassung nach Anspruch 1 oder 2, wobei in der Verbindungsleitung (50) zusätzlich ein Ölnebelabscheider (51) angeordnet ist.

4. Vorrichtung zur Druckanpassung nach Anspruch 3, wobei der Ölnebelabschneider (51) in der Verbindungsleitung (50) am nächsten beim Lagerraum (11) angeordnet ist.

5. Vorrichtung zur Druckanpassung nach einem der vorangehenden Ansprüche, wobei im Bereich eines Ölablaufs (42) des Lagerraums (11) des Abgasturboladers ein Siphon angeordnet ist.

6. Abgasturbolader, umfassend einen Verdichter, eine Abgasturbine sowie eine Vorrichtung zur Druckanpassung nach einem der vorangehenden Ansprüche, welche einen Luftaustritt (22) des Verdichters und einen Lagerraum (11) des Abgasturboladers verbindet.
